# EUROPÄISCHE PATENTSCHRIFT

(11) **EP 1 787 560 B1**
(45) Veröffentlichungstag und Bekanntmachung des Hinweises auf die Patenterteilung: **28.05.2008**
(21) Anmeldenummer: 05027013.1
(22) Anmeldetag: 09.12.2005
(51) Int. Cl.: A47L 9/14, B01D 45/08

(54) **Staubsaugerfilterbeutel mit Ablenkvorrichtung**
Vacuum cleaner dust bag with deflection device
Sac à poussières d'aspirateur avec dispositif de déviation

(30) Priorität: 22.11.2005 EP 05025480
(43) Veröffentlichungstag der Anmeldung: 23.05.2007
(60) Teilanmeldung: 08007722.5
(73) Patentinhaber: Eurofilters Holding N.V, 3900 Overpelt (BE)
(72) Erfinder: Sauer,Ralf, c/o EUROFILTERS HOLDING N.V., 3900 Overpelt (BE); Schultink, Jan, c/o EUROFILTERS HOLDING N.V., 3900 Overpelt (BE)
(74) Vertreter: Grünecker, Kinkeldey, Stockmair & Schwanhäusser Anwaltssozietät

(56) Entgegenhaltungen:
- EP-A- 1 685 784
- BE-A- 529 649
- DE-U- 9 101 981
- DE-U1- 8 811 821
- US-A- 3 370 405
- US-A- 5 603 741
- US-A1- 1 316 442
- US-A1- 2 068 332
- US-A1- 4 468 498
- US-A1- 5 180 103

## Beschreibung

Die Erfindung betrifft einen Staubsaugerfilterbeutel mit verbesserten Filtereigenschaften und einer erhöhten Standzeit.

Aus dem Stand der Technik sind verschiedene Arten von Staubsaugerbeuteln bekennt, die in unterschiedlicher Art und Weise versuchen, gute Filtereigenschaften und eine lange Standzeit bereitzustellen.

Aus der EP 0 960 645 ist es beispielsweise bekannt, einen Staubsaugerfilterbeutel mit einer Filterstruktur bereitzustellen, bei der in Richtung des Luftstroms aus dem Beutelinnern nach Außen ein Grobfilter vor einem Feinfilter angeordnet ist. Der Grobfilter weist eine hohe Staubspeicherkapazität auf, sodass Staubpartikel in seinen Poren über die gesamte Dicke eingelagert werden. Auf diese Weise wird ein Verstopfen des Filtermaterials verzögert und damit die Standzeit des Beutels erhöht.

Aus der WO 93/21812 ist ein Staubsaugerfilterbeutel bekannt, bei dem auf der der Eingangsöffnung gegenüberliegenden Beutelwand eine Schutzschicht aus einem widerstandsfähigen Material vorgesehen ist. Dadurch wird verhindert, dass die der Einlassöffnung des Beutels gegenüberliegende Beutelwand durch die mit hoher Geschwindigkeit direkt auftreffenden Partikel beschädigt wird.

Aus der US4,469,498 ist ein Verbindungsstück zum Verbinden eines Filterbeutels mit dem Saugeinlass eines Staubsaugers bekannt. Dabei wird ein Filterbeutel lösbar mit dem Saugeinlass mit einem geeigneten Adapterverbindungsstück verbunden, wobei ein Schmutzabfängermittel am Auslassende des Verbindungsstücks vorgesehen ist.

Die BE 529649 zeigt einen Verschluss für einen Staubsauger, bei dem ein Stutzen mit einem schleifenförmigen Band über einen Luftkanal gestreift wird.

Aus der DE 8811821 ist ein Anschlussstück eines Filtersack mit einem auf einem Gerät-Anschlussstutzen aufzusteckenden Aufsteckteil bekannt. Das Anschlussstück weist eine Abdeckmembran auf, die durch eine Schlitzanordnung in kreissektorenförmige Membranteile unterteilt ist.

Aus der US 2,068,332 ist ein Verfahren und Mittel zum Einsammeln von Staub aus einem Luftstrom bekannt. Die Öffnung eines Beutels ist mit einem Kanal lösbar verbunden, wobei der Kanal mit einem Mundstück in komischer Form versehen ist.

Die US 5,180,103 zeigt eine Düse für ein Verteilungssystem zum gleichmäßigen Verteilen von Flüssigkeit auf einer Oberfläche.

Weitere Staubsaugerfilterbeutel mit einer Ablenkvorrichtung werden in US 5 603 741, US 3 370 405 und in DE 9 101 981 U offenbart.

Die Aufgabe der vorliegenden Erfindung besteht darin, angesichts der aus dem Stand der Technik bekannten Beutel einen verbesserten Staubsaugerfilterbeutel bereitzustellen, der eine erhöhte Standzeit bei sehr guten Filtrationseigenschaften aufweist.

Diese Aufgabe wird gelöst durch einen Staubsaugerfilterbeutel gemäß Anspruch 1.

Erfindungsgemäß wird ein Staubsaugerfilterbeutel mit einer Einlassöffnung und einer im Bereich der Einlassöffnung angeordneten Ablenkvorrichtung, die derart ausgebildet ist, dass ein durch die Einlassöffnung eintretender Luftstrom ablenkbar ist, bereitgestellt.

Es hat sich überraschenderweise herausgestellt, dass die Standzeit eines derartigen Staubsaugerfilterbeutels bei hervorragenden Filtereigenschaften signifikant erhöht ist. Insbesondere wurde festgestellt, dass der sich in einem Filterbeutel bildende Filterkuchen erheblich zum Filtrationsverhalten des Filterbeutels beiträgt. Durch die erfindungsgemäß vorgesehene Ablenkvorrichtung wird ein durch die Einlassöffnung eintretender Luftstrom abgelenkt, so dass die mitgeführten Partikel gleichmäßig im Beutelinnem verteilt werden und folglich eine gleichmäßige Verteilung des sich bildenden Filterkuchens und damit eine erhöhte Standzeit erhalten wird.

Die Ablenkvorrichtung hat weiterhin den Vorteil, dass die im Luftstrom mitgeführten Partikel nicht ungehindert und mit großer Geschwindigkeit auf die der Einlassöffnung gegenüberliegende Beutelwand prallen und diese zerstören.

Durch die Anordnung der Ablenkvorrichtung im Beutelinneren an der Einlassöffnung kann die Ablenkvorrichtung auf besonders einfache Weise mit dem Staubsaugerfilterbeutel verbunden werden. So ist es möglich, die Ablenkvorrichtung auf der Innenseite des Staubsaugerfilterbeutels durch eine Klebeverbindung anzuordnen. Insbesondere wenn der Staubsaugerfilterbeutel eine flache Form haben soll, ermöglicht diese Weiterbildung eine produktionstechnisch sehr günstig Herstellung.

Gemäß einer anderen Weiterbildung der oben beschriebenen Erfindung kann die Staubsaugerfilterbeutel weiter eine Halteplatte zur Halterung des Beutels in einem Staubsauger aufweisen, wobei die Ablenkvorrichtung an der Halteplatte angeordnet ist und sich in das Beutelinnere erstreckt. Entsprechend dieser Ausführung kann zunächst die Kombination aus Halteplatte und Ablenkvorrichtung ausgebildet werden und diese Kombination dann mit dem Staubsaugerfilterbeutel verbunden werden. Hierzu lassen sich bekannte Verfahren zum Befestigen von Halteplatten an Staubsaugerültenbeuteln einsetzen. Diese Weiterbildung kann in Staubsaugerfilterbeutel mit Klotzbodenform zur fertigungstechnisch günstigen Herstellung eingesetzt werden. Gemäß einer bevorzugten Weiterbildung aller zuvor beschriebenen Staubsaugerfilterbeutel kann Ablenkvorrichtung zum Aufteilen des Luftstroms in wenigstens zwei Teilströme mit unterschiedlichen Strömungsrichtungen ausgebildet sein.

Durch eine derartige Aufteilung in zwei oder mehr Teilströme wird eine noch gleichmäßigere Verteilung des Filterkuchens erreicht. Außerdem ist die Zahl der Partikel pro Teilchenstrom im Vergleich mit dem eintretenden Luftstrom verringert, was die Belastung der Beutelwände durch die einzelnen Teilströme reduziert.

Die Ablenkvorrichtung der beschriebenen Filterbeutel kann die Einlassöffnung wenigstens teilweise umgebend an der Beutelinnenseite befestigt sein. Damit wird insbesondere eine stabile Anordnung der Ablenkvorrichtung erhalten, die auch bei hohen Strömungsgeschwindigkeiten ihre Aufgabe zuverlässig erfüllen kann.

Insbesondere kann die Ablenkvorrichtung wenigstens eine der Einlassöffnung gegenüberliegende Ablenkfläche umfassen. Durch wenigstens eine derartige Ablenk- oder Prallfläche lässt sich insbesondere die Geschwindigkeit der Partikel in geeigneter Weise reduzieren. Der Abstand bzw. der mittlere Abstand einer derartigen Ablenkfläche von der Einlassöffnung hängt von der Größe und Form des Staubsaugerfilterbeutels ab.

Die wenigstens eine Ablenkfläche kann in einem vorherbestimmten Winkel relativ zur Ebene der Einlassöffnung, insbesondere parallel zur Ebene der Einlassöffnung,angeordnet sein.

Durch eine geeignete Wahl des Winkels kann die Ablenkung des Luftstroms an unterschiedliche Parameter wie Beutelgeometrie bzw. -dimensionierung, Einströmwinkel angepasst und optimiert werden. Bei einer parallel zur Ebene der Einlassöffnung angeordneten Ablenkfläche wird eine senkrecht zur Ebene der Einlassöffnung einströmende Luftströmung um etwa 90° umgelenkt, was eine günstige Verteilung der Partikel und des daraus resultierenden Filterkuchens zur Folge hat.

Vorzugsweise kann die wenigstens Ablenkfläche eine größere Fläche als die Fläche der Eintrittsöffnung aufweisen. Damit wird weitestgehend vermieden, dass der Luftstrom lediglich um die Ablenkfläche herumgelenkt wird und danach aber mit im Wesentlichen unveränderter Strömungsgeschwindigkeit auf die der Einlassöffnung gegenüberliegende Seite trifft. Jede Ablenkfläche kann eine Fläche von 15 bis 100 cm², insbesondere 40 bis 60 cm² aufweisen.

Die Ablenkvorrichtung der zuvor beschriebenen Staubsaugerfilterbeutel kann in einer Weiterbildung zwei trapezförmige oder rechteckige Ablenkflächen aufweisen, die, ausgehend von der Einlassöffnung, keilförmig aufeinander zulaufen und an einer der Einlassöffnung gegenüberliegenden Verbindungskante miteinander verbunden sind.

Insbesondere kann eine derartige Ablenkvorrichtung weiterhin an wenigstens einem Ende der Verbindungskante eine Ausströmöffnung und einen die Einlassöffnung umgebenden und mit der Beutelinnenseite verbundenen Bereich, der nach Art eines Klotzbodens ausgebildet ist und eine Einströmöffnung aufweist, umfassen.

Auf diese Weise können aus dem Staubsaugerbeutelbereich bekannte Klotzbodenformen, wie sie beispielsweise in der DE 100 64 608 beschrieben sind, (in verkleinerter Form) als Ablenkvorrichtungen eingesetzt werden, wobei im vorliegenden Fall in einer der oder beiden dreieckigen Seiten, nämlich am Ende der Verbindungskante, eine Ausströmöffnung vorgesehen ist. Es ist zu betonen, dass die Form der Ablenkvorrichtung unabhängig von der Form des Staubfilterbeutels gewählt wird; somit muss der Staubfilterbeutel selbst keine Klotzbodenform aufweisen, selbst wenn diese für die Ablenkvorrichtung vorgesehen ist.

Die Ablenkvorrichtung der zuvor beschriebenen Staubsaugerfilterbeutel kann in einer alternativen Weiterbildung die Form eines Quaders aufweisen, der in einer ersten, die Einlassöffnung umgebenden und mit der Beutelinnenseite verbundenen Seitenfläche eine Einströmöffnung und in wenigstens einer senkrecht zu der ersten Seitenfläche stehenden weiteren Seitenfläche eine Ausströmöffnung aufweist.

Durch die Quaderform wird ein stabiler Aufbau der Ablenkvorrichtung erzielt, wobei gleichzeitig eine geeignete Ablenk- oder Prallfläche zur Umlenkung des Luftstroms durch die der Einströmöffnung gegenüberliegende Seitenfläche des Quaders gebildet wird. Dabei kann insbesondere jede Ausströmöffnung die gesamte Seitenfläche des Quaders einnehmen. Damit wird vermieden, dass sich in einer Ecke des Quaders eingesaugte Staubpartikel ansammeln.

Bei einer in Form eines Quaders vorgesehenen Ablenkvorrichtung können insbesondere wenigstens zwei gegenüberliegende Ausströmöffnungen vorgesehen sein.

Durch diese wenigstens zwei gegenüberliegende Ausströmöffnungen wird einerseits erreicht, dass der Luftstrom in zwei Teilströme aufgeteilt wird, und andererseits diese zwei Teilströme entgegengesetzte Richtungen aufweisen, was insgesamt zu einer sehr homogenen Verteilung des Filterkuchens im Staubsaugerfilterbeutel führt.

Die Ablenkvorrichtung der zuvor beschriebenen Staubsaugerfilterbeutel kann in einer Weiterbildung derart ausgebildet ist, dass sie in einer ersten Stellung eine im Vergleich zu einer zweiten Stellung kleinere Ausdehnung senkrecht zur Ebene der Einlassöffnung aufweist.

Dies bedeutet, dass die Ablenkvorrichtung zusammenlegbar ist. Durch die kleinere Ausdehnung in der zweiten Stellung lässt sich der Staubsaugerfilterbeutel, insbesondere vor dem Gebrauch, in eine sehr kompakte Form bringen. Dies ist bei Flachbeuteln von besonderem Vorteil, die sich zum Verpacken auf bestimmte Formate zusammenfalten lassen. Durch derartige zusammenlegbare Ablenkvorrichtungen lässt sich vermeiden, dass die Dicke der zusammengelegten Beutel wesentlich erhöht wird. Vorzugsweise kann die Ablenkvorrichtung in der zweiten Stellung im wesentlichen flach ausgebildet sein.

Insbesondere kann die Ablenkvorrichtung derart ausgebildet sein, dass sie durch einen Saugluftstrom von der ersten Stellung in die zweite Stellung bringbar ist.

Damit kann der Beutel während des Transports eine Ablenkvorrichtung in der zweiten Stellung mit kleinerer Ausdehnung aufweisen, die dann im Betrieb des Filterbeutels im Staubsauger beispielsweise durch den aufgrund des durch das Ansaugen von Luft im Beutel entstehenden Unterdrucks in ihre Betriebsstellung übergeht, in der sie dann ihre Ablenkfunktion erfüllt.

Die zuvor beschriebenen Filterbeutel können eine Rückstelleinrichtung aufweisen, die derart ausgebildet ist, dass die Ablenkvorrichtung in Abhängigkeit von einem Saugluftstrom von der zweiten Stellung in die erste Stellung bringbar ist.

Insbesondere kann die Ablenkvorrichtung ein Federelement umfassen, das auf einen Teil der Ablenkvorrichtung eine Rückstellkraft derart ausübt, dass die Ablenkvorrichtung in Abhängigkeit von einem Saugluftstrom von der zweiten Stellung in die erste Stellung bringbar ist.

Ein solches Federelement ermöglicht, dass die Ablenkvorrichtung bei Nachlassen des Saugluftstroms, beispielsweise wenn der Staubsauger ausgeschaltet wird, aus der ersten Stellung wieder in die zweite Stellung mit verringerter Ausdehnung senkrecht zur Ebene der Einlassöffnung übergeht.

Die Ablenkvorrichtung kann Falzlinien aufweisen, so dass die Ablenkvorrichtung von der ersten oder zweiten Stellung in die zweite bzw. erste Stellung bringbar ist. Derartige Falzlinien erlauben das gewünschte Zusammenlegen bzw. falten in einfacher und zuverlässiger Weise.

Alternativ zu den beschriebenen Weiterbildungen kann die Ablenkvorrichtung allerdings auch starr ausgebildet sein, so dass ein Zusammenlegen nicht möglich ist.

Bei den zuvor beschriebenen Staubsaugerfilterbeuteln kann die Ablenkvorrichtung weiterhin zum Verschließen der Einlassöffnung ausgebildet sein.

Damit wird ein zusätzliches Verschlusselement, das häufig an der an der Außenseite des Staubsaugerfilterbeutels befestigten Halteplatte vorgesehen ist, vermieden, was den Aufbau und die Herstellung des Staubsaugerfilterbeutels wesentlich vereinfacht.

Insbesondere kann die Ablenkvorrichtung, wie zuvor beschrieben, ein Federelement umfassen, das auf einen Teil der Ablenkvorrichtung eine Rückstellkraft ausübt, um die Einlassöffnung zu verschließen.

Dies erlaubt in einfacher Weise die Verwendung der Ablenkvorrichtung als Verschluss für die Einlassöffnung, was ein gesondertes Verschlusselement an einer Halteplatte des Filterbeutels erübrigt. Weiterhin wird der Staubsaugerfilterbeutel bei einer derartigen Ablenkvorrichtung, die auch als Verschlusselement fungiert, bereits vor dem Gebrauch und insbesondere während des Transports verschlossen, was ein Bereitstellen von lose im Staubsaugerfilterbeutel vorhandenen Partikeln, beispielsweise von Geruchsadsorbentien, ermöglicht.

Die zuvor beschriebenen Staubsaugerfilterbeutel können weiterhin ein Dichtungselement, insbesondere zum Abdichten der Einlassöffnung, umfassen.

Mit einem derartigen Dichtungselement kann insbesondere die Einlassöffnung um einen eingeführten Stutzen herum abgedichtet werden.

Das Dichtungselement kann insbesondere zwischen der Einlassöffnung und der Ablenkvorrichtung angeordnet sein. Damit wird sowohl das Anordnen als auch das Befestigen des Dichtungselements vereinfacht. Alternativ kann das Dichtungselement innerhalb der Ablenkvorrichtung angeordnet sein.

Das Material des Dichtungselements kann insbesondere Gummi, ein Elastomer, eine Folie oder einen Schaum, insbesondere einen geschlossenzelligen Schaum, umfassen.

Durch eine geeignete Anordnung des Dichtungselements kann dieses weiterhin eine verbesserte Dichtung der Einlassöffnung beim Verschließen mit der Ablenkvorrichtung ermöglichen.

Die Ablenkvorrichtung der zuvor beschriebenen Staubsaugerfilterbeutel kann insbesondere ein im Wesentlichen luftundurchlässiges Material umfassen. Dies hat den Vorteil, dass der Luftstrom und die mitgeführten Partikel im Wesentlichen vollständig abgelenkt werden, sodass sich insbesondere auf der Ablenkvorrichtung keine Partikelablagerungen bilden.

Das Material der Ablenkvorrichtung kann Pappe, einen Kunststoff, einen Vliesstoff oder eine Folie umfassen. Auch andere Materialien sind möglich; insbesondere ist eine ausreichende Steifigkeit des Materials von Vorteil, damit die Ablenkvorrichtung durch den Luftstrom nicht übermäßig bewegt wird.

Bei den zuvor beschriebenen Staubsaugerfilterbeuteln kann die Ablenkvorrichtung mit dem Filtermaterial insbesondere verklebt oder verschweißt sein. Beispielsweise kann die Ablenkvorrichtung an Verbindungsstellen mit der Beutelinnenseite Polyethylen oder Polypropylen umfassen oder damit beschichtet sein. Dies ermöglicht, die Ablenkvorrichtung und eine diese Materialien umfassende äußere Halteplatte mittels Ultraschallschweißen gleichzeitig am Filtermaterial der Beutelwand zu befestigen.

Weitere Merkmale und Vorteile der Erfindung werden nachfolgend anhand der in den Figuren illustrierten Ausführungsbeispielen gemäß einer ersten konstruktiven Alternative und anhand von nicht unter Bezugnahme auf Figuren beschriebenen Ausführungsbeispielen gemäß einer zweiten konstruktiven Alternative näher erläutert. Hierbei zeigt:
- Figur 1: eine Ansicht eines ersten Ausführungsbeispiels einer Ablenkvorrichtung gemäß der vorliegenden Erfindung;
- Figur 2: einen Querschnitt durch ein weiteres Ausführungsbeispiel einer Ablenkvorrichtung gemäß der vorliegenden Erfindung;
- Figur 3: einen Querschnitt durch ein weiteres Ausführungsbeispiels einer Ablenkvorrichtung gemäß der vorliegenden Erfindung;
- Figur 4: ein Foto mit einem Vergleich eines herkömmlichen Staubsaugerfilterbeutels und eines Staubsaugerfilterbeutels mit einer Ablenkvorrichtung gemäß der vorliegenden Erfindung;
- Figur 5: eine Grafik zur Illustration der verbesserten Filtereigenschaften;
- Figur 6: eine weitere Grafik zur Illustration der verbesserten Filtereigenschaften.

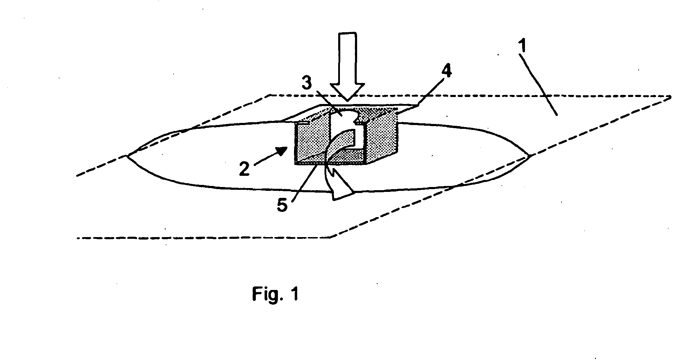

Figur 1 zeigt eine Ansicht eines Ausführungsbeispiels eines erfindungsgemäßen Staubsaugerfilterbeutels.

Der Staubsaugerfilterbeutel 1 ist in dieser Figur lediglich skizzenhaft angedeutet. Im Innem des Filterbeutels ist eine Ablenkvorrichtung 2 an der Einlassöffnung 3 mit der Beutelinnenseite verbunden. An der Außenseite des Beutels ist eine Halteplatte 4 angeordnet, mit der der Filterbeutel in einem Staubsauger fixiert werden kann.

In dem gezeigten Beispiel ist die Ablenkvorrichtung 2 in Form eines Quaders ausgebildet. Die Grundfläche 5 dieses Quaders ist parallel zur Ebene der Einlassöffnung 3 angeordnet und erfüllt die Funktion einer Ablenkfläche oder Prallplatte. Zwei der Seitenflächen senkrecht zur Prallplatte weisen jeweils eine Ausströmöffnung auf (in der gezeigten Ansicht vorne und hinten), die jeweils die gesamte Seitenfläche des Quaders einnehmen. Die beiden anderen Seitenflächen (links und rechts in der gezeigten Ansicht) sind geschlossen. Somit wird ein durch die Einlassöffnung 3 eintretender Luftstrom in zwei Teilströme aufgeteilt, die relativ zur Einströmöffnung um 90° abgelenkt sind und nach hinten bzw. vorne in den Beutel strömen.

Die Abmessungen der quaderförmigen Ablenkvorrichtungen können in dem gezeigten Beispiel 7,5 cm x 8 cm x 3 cm (Breite x Tiefe x Höhe) betragen. Das Material kann beispielsweise Pappe sein.

Das gezeigte Ausführungsbeispiel lässt sich in vielfältiger Weise modifizieren.

Zunächst kann die Ausrichtung der Ablenkvorrichtung anders gewählt werden, indem beispielsweise der Quader um 45° relativ zu einer Achse gedreht ist, die senkrecht auf der Ablenkfläche steht, und durch ihren Mittelpunkt geht. Auf diese Weise können die Teilströme in die Ecken des Beutels gelenkt werden.

Weiterhin ist es möglich, nur in einer oder in drei oder in allen Seitenflächen des Quaders eine Ausströmöffnung vorzusehen. Auch die Abmessungen und die Materialien können anders gewählt werden.

Die Beutelwand des Staubsaugerfilterbeutels kann beispielsweise einen Aufbau, wie in der EP 0 960 645 beschrieben, aufweisen. Insbesondere kann eine Grobfilterschicht, beispielsweise aus einem Meltblown, in Strömungsrichtung aus dem Innem des Beutels nach außen vor einer Feinfilterschicht, beispielsweise ebenfalls aus einem Meltblown, angeordnet sein. Zusätzlich können in der Filterstruktur noch weitere Schichten vorgesehen sein, beispielsweise Stützschichten und/oder geruchsabsorbierende Schichten.

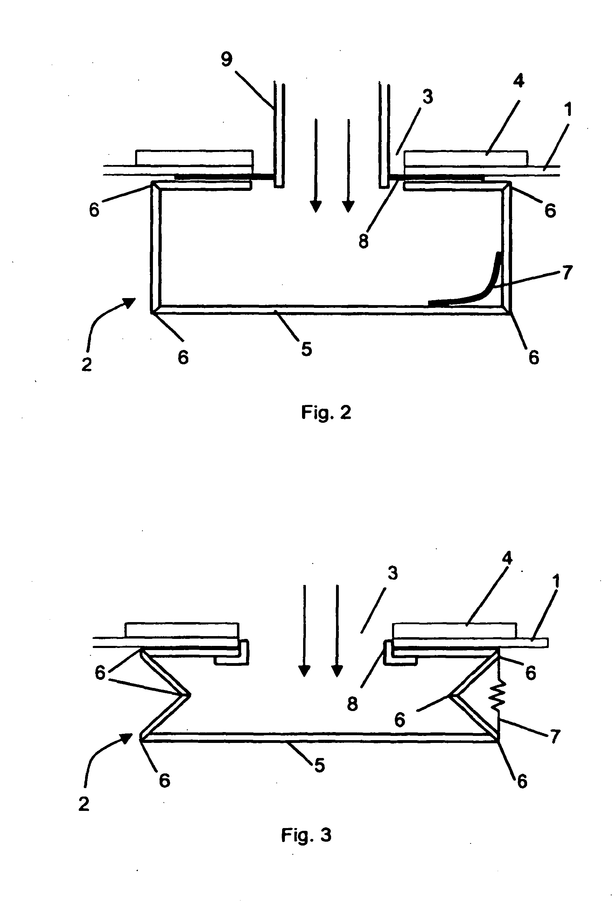

Figur 2 zeigt schematisch ein weiteres Ausführungsbeispiel einer erfindungsgemäßen Ablenkvorrichtung. Gleiche Elemente wie in Figur 1 sind mit gleichen Bezugszeichen versehen.

Die in Querschnittsansicht gezeigte Ablenkvorrichtung ist hier wieder in Form eines Quaders ausgebildet. In dem gezeigten Ausführungsbeispiel sind die senkrecht zur Grundfläche 5 (Ablenkfläche oder Prallplatte) stehenden Seitenflächen vorne und hinten offen, um als Ausströmöffnungen zu dienen. An den Kanten zwischen der Prallplatte und den beiden Seitenflächen bzw. zwischen den Seitenflächen und der oberen Fläche mit der Einströmöffnung sind Falzlinien 6 vorgesehen, die ein Zusammenlegen der Ablenkvorrichtung ermöglichen, um die Ausdehnung der Ablenkvorrichtung senkrecht zur Ebene der Einströmöffnung zu verkleinern. Damit lassen sich entsprechend ausgerüstete Staubsaugerfilterbeutel in diese Stellung in kompakter Weise zusammenlegen und transportieren.

In dem gezeigten Beispiel ist weiterhin ein (optionales) Federelement 7 vorgesehen, das hier in Form einer Biegefeder ausgebildet ist. Falls ein Saugluftstrom vorhanden ist, indem beispielsweise Luft angesaugt und somit im Beutelinnern ein Unterdruck erzeugt wird, wird die Ablenkvorrichtung entgegen der Rückstellkraft der Biegefeder 7 auseinander geklappt und nimmt ihre quaderförmige Gestalt an. Bei schwachem oder verschwindendem Saugluftstrom wirkt die Biegefeder 7 derart, dass die Seitenflächen und die Grundfläche 5 zur Seite (in der gezeigten Ansicht nach links) geklappt werden, sodass die Ablenkvorrichtung flach zusammengelegt wird. Im flach zusammengelegten Zustand liegt dann die rechte Seitenfläche im Wesentlichen in einer Ebene mit der Grundfläche 5. Die Biegefeder 7 kann beispielsweise mit der Grundfläche und der rechten Seitenfläche verklebt sein. Eine derart zusammenlegbare Ablenkvorrichtung kann insbesondere auch dazu dienen, die Einströmöffnung und die Einlassöffnung sicher zu verschließen. Damit erübrigt sich ein weiteres Verschlusselement an der Halteplatte 4.

Alternativ zu der Biegefeder kann beispielsweise auch ein Permanentmagnet in oder an der Halteplatte 4 und ein ferromagnetisches Element in oder an einer der Seitenflächen oder der Grundfläche 5 vorgesehen sein. Damit wird ebenfalls eine Rückstelleinrichtung gebildet, die ein Zusammenlegen der Ablenkvorrichtung bei nachlassendem Saugluftstrom ermöglicht.

Zusätzlich kann, wie in dem Beispiel gezeigt ist, ein Dichtungselement 8 vorgesehen sein, das hier zwischen der Ablenkvorrichtung und der Beutelinnenseite angeordnet ist. Alternativ kann das Dichtungselement auch innerhalb der Ablenkvorrichtung an der oberen Fläche, in der sich die Einströmöffnung befindet, angeordnet sein. Das Dichtungselement ist um die gesamte Einlassöffnung herum vorgesehen. Durch dieses Dichtungselement wird insbesondere eine geeignete Abdichtung nach Einführen eines Stutzens 9, der mit dem Staubsaugerschlauch verbunden ist, erzielt.

Ein weiteres Ausführungsbeispiel ist schematisch in Figur 3 gezeigt. In diesem Ausführungsbeispiel kann die Ablenkvorrichtung nach Art einer Ziehharmonika zusammengelegt werden. Hier weisen die beiden links und rechts angeordneten Seitenflächen jeweils in ihrer Mitte eine parallel zur Grundfläche verlaufende Falzlinie auf, an der die Seitenfläche geknickt werden kann. Auch hier ist ein Federelement 7 vorgesehen, auf Grund dessen Rückstellkraft die beiden Seitenflächen zusammenfalten und die Grundfläche 5 sich in Richtung Einlassöffnung bewegt. Das Federelement kann beispielsweise auch in eine der Seitenflächen integriert sein.

In dem hier gezeigten Ausführungsbeispiel ist das Dichtungselement 8 aus einem Schaum. Dieser Schaum ist zwar im Innern der Ablenkvorrichtung aufgebracht, ragt aber in der Einströmöffnung in Richtung der Einlassöffnung. Durch ein derartig angeordnetes Dichtungselement wird nicht nur ein eingeführter Stutzen abgedichtet; weiterhin wird auch die Einströmöffnung in zusammengelegtem Zustand der Ablenkvorrichtung in vorteilhafter Weise abgedichtet. Auch hier ist das Dichtungselement um die gesamte Einströmöffnung und Einlassöffnung herum angeordnet.

In den zuvor gezeigten Beispielen kann die Ablenkvorrichtung in unterschiedlicher Weise mit der Beutelinnenseite verbunden sein. Gemäß einer Möglichkeit wird die Ablenkvorrichtung mit der Beutelinnenwand verklebt. Alternativ kann die Oberseite einer Ablenkvorrichtung, die beispielsweise aus Pappe ist, mit PE beschichtet sein, sodass bei einem Anschweißen einer PE-Halteplatte mittels Ultraschall auch gleichzeitig die Ablenkvorrichtung mit der Beutelwand verschweißt wird.

Alternativ zu der beschriebenen Quadergestalt kann die Ablenkvorrichtung auch keilförmige oder keilähnliche Gestalt aufweisen. Insbesondere kann Ablenkvorrichtung wie ein verkleinerter Filterbeutel mit Klotzboden ausgebildet sein, allerdings ohne eigene Halteplatte oder ähnlichem. Bei dieser Form ist der Klotzboden mit Einströmöffnung mit der Beutelinnenseite des Staubsaugerfilterbeutels verbunden; in die beiden schmalen Seitenflächen der Ablenkvorrichtung sind an der Keilspitze jeweils zwei Löcher als Ausströmöffnungen geschnitten. Auf diese Weise wird die eintretende Luft durch die breiten Seitenflächen und den Wickelfalz mit der Verbindungskante bzw. der im Bereich des Wickelfalzes gebildeten Fläche durch die Ausströmöffnungen abgelenkt. Der Vorteil dieser Gestalt der Ablenkvorrichtung besteht darin, dass sie ebenfalls in einfacher Weise zusammengelegt werden kann.

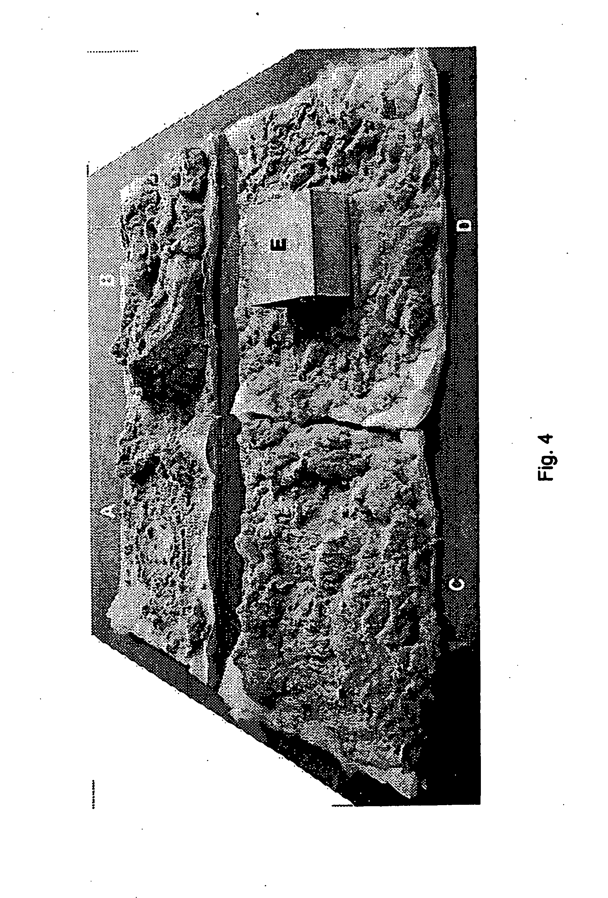

Die vorteilhaften Auswirkungen einer Ablenkvorrichtung gemäß der vorliegenden findung sind in Figur 4 gezeigt. Zu sehen sind zwei aufgeschnittene Flachbeutel, die zuvor mit 400 g Prüfstaub (DMT-Prüfstaub Typ 8 der Deutschen Montan Technologie GmbH) beladen wurden.

Der im Hintergrund der Figur angeordnete Staubsaugerfilterbeutel weist keine Ablenkvorrichtung auf. Die mit A bezeichnete Seite des Beutels ist die Anströmseite, d. h. die Seite, auf der der eingetretene Luftstrom im Innem des Beutels auftrifft. Die mit B bezeichnete Seite weist die Einlassöffnung auf, wie in der Mitte dieser Seite B zu erkennen ist. Für diesen Fall ohne Ablenkvorrichtung ist deutlich zu erkennen, dass der Filterkuchen zum größten Teil auf der einströmseitigen Beutelinnenwand liegt. Auf der gegenüberliegenden Seite hat sich fast kein Filterkuchen abgelagert.

Im Vordergrund der Figur ist ein ebenfalls am umlaufenden Rand aufgetrennter Flachbeutel mit einer erfindungsgemäßen Ablenkvorrichtung gezeigt. Die Anströmseite bzw. Unterseite des Beutels ist mit C bezeichnet, die Oberseite mit der Einlassöffnung mit D. An der Einlassöffnung ist eine quaderförmige Ablenkvorrichtung aus Pappe angeordnet. Diese Ablenkvorrichtung weist zwei gegenüberliegende Ausströmöffnungen auf, die jeweils die gesamte linke bzw. rechte Seitenfläche (in der gezeigten Ansicht) einnehmen. Die Ablenkvorrichtung hat die oben genannten Maße 7,5 cm x 8 cm x 3 cm.

Die Staubbeladung wurde auch hier mit der gleichen Menge an Prüfstaub (DMT Typ 8) durchgeführt. Wie man unmittelbar erkennen kann, ist der Filterkuchen in diesem Fall gleichmäßig über die gesamte Beutelinnenwand, sowohl auf der Ober- als auch auf der Unterseite, bedeckt. Damit wirkt der Filterkuchen selbst auch als Filter und ermöglicht eine gleichmäßige Einlagerung von Feinstaubpartikeln.

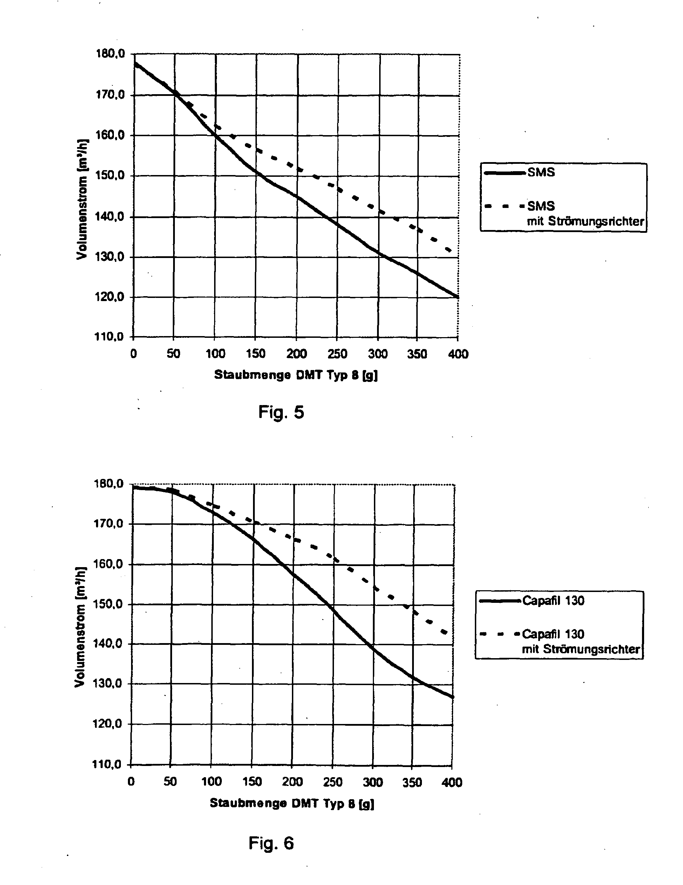

Das Ergebnis dieser verbesserten Verteilung des Filterkuchens ist außerdem in der Grafiken gemäß Figur 5 und 6 illustriert. In beiden Fällen wurde ein Filterbeutel einmal ohne und einmal mit einer Ablenkvorrichtung gemäß der vorliegenden Erfindung untersucht. Das Untersuchungsverfahren wurde wie folgt durchgeführt.

Als Staubsauger wurde ein Miele Performance 2300 vom Typ HS 05 (Modell S749, Nr. 71683038) verwendet, der auf maximale Leistung gestellt war. Neben dem untersuchten Filterbeutel waren noch der vorgesehene Ausblasfilter und Motorschutzfilter vorhanden. Die untersuchten Staubsaugerfilterbeutel hatten eine Flachgestalt und wiesen Abmessungen von 295 x 270 mm auf. Die Ablenkvorrichtung hatte eine Quadergestalt, wie in Figur 4 gezeigt, mit einer Höhe von 30 mm, einer Breite von 75 mm und einer Länge von 80 mm. Zwei der Seitenflächen mit den Abmessungen 75 mm x 30 mm waren offen und dienten als Ausströmöffnungen. Als Prüfstaub wurde DMT Typ 8 verwendet.

Nach einem Warmlaufen des Staubsaugers für 10 Minuten wurde der zu prüfende Filterbeutel eingebaut. Der Volumenstrom (in m³/h) ohne Staubbeladung wurde nach 1 Minute Laufzeit des Gerätes gemessen. Anschließend wurde eine erste Staubportion von 50 g innerhalb von 30 s eingesaugt und dann der Volumenstrom nach 1 Minute gemessen. Dieser Schritt wurde für die folgenden Staubzugaben entsprechend wiederholt bis 400 g Staub zugegeben worden sind.

Das für Figur 5 verwendete Filtermedium war ein SMS (Spunbond/Meltblown/Spunbond), wobei die Spunbonds ein Flächengewicht von 17 g/m² und das Meltblown ein Flächengewicht von 24 g/m² aufwiesen.

Bei dem für Figur 6 verwendeten Filtermedium handelt es sich um das Medium Capafil 130 (Stand 2005), das von dem Unternehmen Airflo N.V. erhältlich ist. Es hat den Aufbau: Spinvlies (17 g/m²), Volumenvlies (130 g/m²), Spinnvlies (17 g/m²), Meltblown (24 g/m²), Spinnvlies (24 g/m²).

Aus beiden Grafiken ist klar erkennbar, dass der Volumenstrom signifikant langsamer abnimmt, wenn eine Ablenkvorrichtung gemäß der vorliegenden Erfindung eingesetzt wird. Dies bedeutet, dass damit ein Filterbeutel mit einer geringeren Verstopfungsneigung und somit einer verbesserten Standzeit bei ausgezeichneten Filtereigenschaften erhalten wird.

Alle oben stehend unter Bezugnahme auf die Zeichnung beschriebenen Ausführungsformen lassen sich gemäß einer zweiten konstruktiven Alternative so abwandeln, dass die Ablenkvorrichtung nicht an der Beutelinnenseite im Bereich der Einlassöffnung angebracht ist, sondern der Staubsaugerfilterbeutel eine Halteplatte zur Halterung des Beutels in einem Staubsauger umfasst, an der die Ablenkvorrichtung angeordnet ist, derart dass sie sich, wenn der Staubsaugerbeutel funktionsbereit vorliegt, in das Beutelinnere erstreckt.

Gemäß einer ersten Ausführungsform dieser zweiten konstruktiven Alternative ist hierzu in dem Staubsaugerfilterbeutel eine Montageöffnung vorzusehen, die so groß ist, dass die an der Halteplatte befestigte Ablenkvorrichtung durch die Montageöffnung in den Staubsaugerfilterbeutel so eingeführt werden kann, dass sie beim Betrieb des Staubsaugers die oben beschriebenen Funktionen und Wirkungen zeigt. Weiterhin muss die Halteplatte etwas größer als die Montageöffnung sein, so dass sie an der Außenseite des Staubsaugerfilterbeutels an diesem befestigt werden kann.

Vorzugsweise ist die Befestigung hierbei derart, dass sie die Halteplatte dicht gegenüber dem Staubsaugerfilterbeutel befestigt. Die Art der Befestigung wird hierbei abhängig von dem Material des Staubsaugefilterbeutels und der Halteeinrichtung gewählt. Beispielsweise aber nicht ausschließlich können Staubsaugerfilterbeutel und Ablenkvorrichtung verklebt oder verschweißt werden, insbesondere durch Ultraschall.

In dieser Ausführungsform ist die Eintrittsöffnung in der Halteplatte ausgebildet und bevorzugt mit einer Dichtung versehen, so dass ein luftdichter Abschluss zwischen Eintrittsstutzen des Staubsaugers und Staubsaugerfilterbeutel gewährleistet ist. Je nach verwendetem Material der Halteplatte können hierzu Dichtungen aus Gummi, Schaum oder ähnlich geeigneten Materialen verwendet werden.

Abgesehen von den besonderen durch die zweite konstruktive Alternative bedingten Merkmalen, kann der Staubsaugerfilterbeutel so ausgebildet werden wie unter Bezug auf die erste konstruktive Alternative beschrieben wurde. Insbesondere kann auch die Ablenkvorrichtung auf verschiedenste Weise, insbesondere wie oben im Zusammenhang mit der ersten konstruktive Alternative beschrieben, ausgebildet werden.

Vorteilhafterweise kann außerdem die Ablenkvorrichtung in Form eines breiten Streifens aus einem trocken- oder nassgelegten Vlies oder Papier, insbesondere Pappe, oder einer Folie ausgebildet sein. Neben diesen Materialen können auch andere Materialen verwendet werden, beispielsweise kann die Ablenkvorrichtung aus Kunststoff vorgesehen werden.

Entsprechend einer zweiten Ausführungsform der zweiten konstruktiven Alternative kann in dem Staubsaugerfilterbeutel eine Montageöffnung vorgesehen werden, die so groß ist, dass sich die Ablenkvorrichtung für sich genommen an der Außenseite des Staubsaugerfilterbeutels befestigen lässt. Auch hierfür werden für die verwendeten Materialen des Staubsaugerfilterbeutels und der Ablenkvorrichtung geeignete Verbindungen gewählt, wie Verkleben oder Verschweißen.

Auf die Verbindung zwischen Ablenkvorrichtung und Staubsaugerfilterbeutel wird schließlich eine Halteplatte entsprechender Größe aufgesetzt und an der Kombination Ablenkvorrichtung und Staubsaugerbeutel befestigt. Hierdurch wird wiederum die Ablenkvorrichtung an der Halteplatte angeordnet.

Die Merkmale des Staubsaugerfilterbeutels, die mit der speziellen konstruktiven Ausgestaltung nichts zu tun haben, können wiederum auf vielfältigste Weise, wie sie insbesondere unter Bezugnahme auf die verschiedenen Ausführungsformen der ersten konstruktiven Alternative und im Zusammenhang mit der ersten Ausführungsform der zweiten konstruktiven Alternative beschrieben sind, ausgebildet werden.

Gemäß einer dritten Ausführungsform der zweiten konstruktiven Alternative wird die Halteplatte aus Kunststoff hergestellt. In diesem Zusammenhang bietet es sich an, die Ablenkvorrichtung als integralen Bestandteil der Halteplatte auszubilden, so dass die Ablenkvorrichtung wiederum an der Halteplatte angeordnet ist. Zweckmäßigerweise werden die Formen von Halteplatte und Ablenkvorrichtung hierbei so gewählt, dass sie sich durch ein Spritzgussverfahren herstellen lassen.

Alternativ zur dritten Ausführung können in einer vierten Ausführungsform Haltevorrichtung und Ablenkvorrichtung auch einzeln durch ein Spritzgussverfahren gebildet werden und dann in geeigneter Weise aneinander befestigt werden.

Sowohl für die dritte als auch für die vierte Ausführungsform gilt in Bezug auf das Einsetzen in den Staubfilterbeutel und das Befestigen der Halteplatte mit Ablenkvorrichtung, in Bezug auf die zu wählenden Dimensionen und in Bezug auf die verwendeten Materialien das im Zusammenhang mit der ersten und zweiten Ausführungsform der zweiten konstruktiven Alternative Gesagte.

## Patentansprüche

1. Staubsaugerfilterbeutel (1) mit einer Einlassöffnung (3) und einer im Bereich der Einlassöffnung (3) angeordneten Ablenkvorrichtung (2), die derart ausgebildet ist, dass ein durch die Einlassöffnung (3) eintretender Luftstrom ablenkbar ist, wobei die Ablenkvorrichtung (2) im Beutelinneren mit dem Filtermaterial der Staubsaugerfilterbeutelwand verklebt oder verschweißt ist,
**dadurch gekennzeichnet, dass** die Ablenkvorrichtung (2) zum Aufteilen des Luftstroms in wenigstens zwei Teilströme mit unterschiedlichen Strömungsrichtungen ausgebildet ist.

2. Staubsaugerfilterbeutel nach Anspruch 1, weiter umfassend eine Halteplatte (4) zur Halterung des Beutels in einem Staubsauger, wobei die Ablenkvorrichtung an der Halteplatte angeordnet ist und sich in das Beutelinnere erstreckt.

3. Staubsaugerfilterbeutel nach einem der vorangegangenen Ansprüche, wobei die Ablenkvorrichtung die Einlassöffnung wenigstens teilweise umgebend an der Beutelinnenseite befestigt ist

4. Staubsaugerfilterbeutel nach einem der vorangegangenen Ansprüche, wobei die Ablenkvorrichtung wenigstens eine der Einlassöffnung gegenüberliegende Ablenkfläche(5) umfasst.

5. Staubsaugerfilterbeutel nach Anspruch 4, wobei die wenigstens eine Ablenkfläche in einem vorherbestimmten Winkel relativ zur Ebene der Einlassöffnung angeordnet ist.

6. Staubsaugerfilterbeutel nach Anspruch 4 oder 5, wobei die wenigstens eine Ablenkfläche eine größere Fläche als die Fläche der Eintrittsöffnung aufweist.

7. Staubsaugerfilterbeutel nach einem der vorangegangenen Ansprüche, wobei die Ablenkvorrichtung zwei trapezförmige oder rechteckige Ablenkflächen aufweist, die, ausgehend von der Einlassöffnung, keilförmig aufeinander zulaufen und an einer der Einlassöffnung gegenüberliegenden Verbindungskante miteinander verbunden sind.

8. Staubsaugerfilterbeutel nach Anspruch 7, wobei die Ablenkvorrichtung weiterhin an wenigstens einem Ende der Verbindungskante eine Ausströmöffnung und einen die Einlassöffnung umgebenden und mit der Beutelinnenseite verbundenen Bereich, der nach Art eines Klotzbodens ausgebildet ist und eine Einströmöffnung aufweist, umfasst.

9. Staubsaugerfilterbeutel nach einem der Ansprüche 1 - 6, wobei die Ablenkvorrichtung die Form eines Quaders aufweist, der in einer ersten, die Einlassöffnung umgebenden und mit der Beutelinnenseite verbundenen Seitenfläche eine Einströmöffnung und in wenigstens einer senkrecht zu der ersten Seitenfläche stehenden weiteren Seitenfläche eine Ausströmöffnung aufweist.

10. Staubsaugerfilterbeutel nach Anspruch 9, wobei jede Ausströmöffnung die gesamte Seitenfläche des Quaders einnimmt.

11. Staubsaugerfilterbeutel nach einem der Ansprüche 8 - 10, wobei wenigstens zwei sich gegenüberliegende Ausströmöffnungen vorgesehen sind.

12. Staubsaugerfilterbeutel nach einem der vorangegangenen Ansprüche, wobei die Ablenkvorrichtung derart ausgebildet ist, dass sie in einer ersten Stellung eine im Vergleich zu einer zweiten Stellung verringerte Ausdehnung senkrecht zur Ebene der Einlassöffnung aufweist.

13. Staubsaugerfilterbeutel nach Anspruch 12, wobei die Ablenkvorrichtung derart ausgebildet ist, dass sie durch einen Saugluftstrom von der ersten Stellung in die zweite Stellung bringbar ist.

14. Staubsaugerfilterbeutel nach Anspruch 12 oder 13, wobei die Ablenkvorrichtung ein Federelement (7) umfasst, das auf einen Teil der Ablenkvorrichtung eine Rückstellkraft derart ausübt, dass die Ablenkvorrichtung in Abhängigkeit von einem Saugluftstrom von der zweiten Stellung in die erste Stellung bringbar ist.

15. Staubsaugerfilterbeutel nach einem der Ansprüche 12 - 14, wobei die Ablenkvorrichtung Falzlinien (6) aufweist, so dass die Ablenkvorrichtung von der ersten oder zweiten Stellung in die zweite bzw. erste Stellung bringbar ist.

16. Staubsaugerfilterbeutel nach einem der vorangegangenen Ansprüche, wobei die Ablenkvorrichtung zum Verschließen der Einlassöffnung ausgebildet ist.

17. Staubsaugerfilterbeutel nach einem der vorangegangenen Ansprüche, umfassend ein Dichtungselement (8), insbesondere zum Abdichten der Einlassöffnung.

18. Staubsaugerfilterbeutel nach Anspruch 17, wobei das Dichtungselement zwischen der Einlassöffnung und der Ablenkvorrichtung oder innerhalb der Ablenkvorrichtung angeordnet ist.

19. Staubsaugerfilterbeutel nach Anspruch 17 oder 18, wobei das Material des Dichtungselements Gummi, ein Elastomer, eine Folie oder einen Schaum umfasst.

20. Staubsaugerfilterbeutel nach einem der vorangegangenen Ansprüche, wobei die Ablenkvorrichtung ein luftundurchlässiges Material umfasst.

21. Staubsaugerfilterbeutel nach einem der vorangegangenen Ansprüche, wobei das Material der Ablenkvorrichtung einen Kunststoff, ein trocken- oder nassgelegtes Vlies oder Papier, insbesondere Pappe, oder eine Folie umfasst.

22. Staubsaugerbeutel nach Anspruch 21, wobei die Halteplatte und die Ablenkvorrichtung aus Kunststoff ausgebildet sind.

23. Staubsaugerfilterbeutel nach Anspruch 22, wobei Halteplatte und Ablenkvorrichtung integral ausgebildet sind.

## Claims

1. A vacuum cleaner filter bag (1) with an inlet opening (3) and a deflection device (2) which is arranged in the vicinity of the inlet opening (3) and which is designed so that an air flow entering through the inlet opening (3) can be deflected, wherein the deflection device (2) is adhered or welded in the bag interior to the filter material of the vacuum cleaner filter bag wall,
**characterised in that** the deflection device (2) is designed to divide the air flow into at least two split streams with different flow directions.

2. A vacuum cleaner filter bag according to Claim 1,
further comprising a retaining plate (4) for retaining the bag in a vacuum cleaner, wherein the deflection device is disposed on the retaining plate and extends into the bag interior.

3. A vacuum cleaner filter bag according to one of the preceding Claims, wherein the deflection device is fastened to the bag interior at least partly surrounding the inlet opening.

4. A vacuum cleaner filter bag according to any one of the preceding Claims, wherein the deflection device comprises at least one deflection surface (5) situated opposite the inlet opening.

5. A vacuum cleaner filter bag according to Claim 4, wherein the at least one deflection surface is arranged at a predetermined angle relative to the plane of the inlet opening.

6. A vacuum cleaner filter bag according to Claim 4 or 5, wherein the at least one deflection surface has a larger area than the area of the inlet opening.

7. A vacuum cleaner filter bag according to any one of the preceding Claims, wherein the deflection device has two trapezium-shaped or rectangular deflection surfaces which, starting from the inlet opening, taper towards one another and are connected to one another on a connecting edge situated opposite the inlet opening.

8. A vacuum cleaner filter bag according to Claim 7, wherein the deflection device further comprises an outflow opening at at least one end of the connecting edge and a zone surrounding the inlet opening and connected with the bag interior, which zone is in the form of a type of block base and has an inflow opening.

9. A vacuum cleaner filter bag according to any one of the Claims 1 to 6, wherein the deflection device has the shape of a rectangular solid which has an inflow opening in a first lateral surface surrounding the inlet opening and connected with the bag interior, and has an outflow opening in at least one further lateral surface disposed perpendicular to the first lateral surface.

10. A vacuum cleaner filter bag according to Claim 9, wherein each outflow opening occupies the entire lateral surface of the rectangular solid.

11. A vacuum cleaner filter bag according to any one of Claims 8 to 10, wherein at least two outflow openings situated opposite one another are provided.

12. A vacuum cleaner filter bag according to any one of the preceding Claims, wherein the deflection device is designed so that in a first position it has, compared with a second position, a reduced extension perpendicular to the plane of the inlet opening.

13. A vacuum cleaner filter bag according to Claim 12, wherein the deflection device is designed so that it can be brought from the first position into the second position by a suction air flow.

14. A vacuum cleaner filter bag according to Claim 12 or 13, wherein the deflection device comprises a spring element (7) which exerts a restoring force on to a part of the deflection device so that the deflection device can be brought from the second position into the first position depending on a suction air flow.

15. A vacuum cleaner filter bag according to any one of Claims 12 to 14, wherein the deflection device has fold lines (6) so that the deflection device can be brought from the first or second position into the second or first position respectively.

16. A vacuum cleaner filter bag according to any one of the preceding Claims, wherein the deflection device is designed to close the inlet opening.

17. A vacuum cleaner filter bag according to any one of the preceding Claims, comprising a sealing element (8), in particular for sealing the inlet opening.

18. A vacuum cleaner filter bag according to Claim 17, wherein the sealing element is disposed between the inlet opening and the deflection device or within the deflection device.

19. A vacuum cleaner filter bag according to Claim 17 or 18, wherein the material of the sealing element comprises rubber, an elastomer, a foil or a foam.

20. A vacuum cleaner filter bag according to any one of the preceding Claims, wherein the deflection device comprises an air-impermeable material.

21. A vacuum cleaner filter bag according to any one of the preceding Claims, wherein the material of the deflection device comprises a plastics material, a dry-laid or wet-laid non-woven fabric or paper, in particular paperboard, or a foil.

22. A vacuum cleaner filter bag according to Claim 21, wherein the retaining plate and the deflection device are made of plastics material.

23. A vacuum cleaner filter bag according to Claim 22, wherein the retaining plate and the deflection device are integrally formed.

## Revendications

1. Sac à poussières d'aspirateur (1) comportant une ouverture d'entrée (3) et un dispositif de déviation (2) disposé dans la zone de l'ouverture d'entrée (3), qui est réalisé de telle manière qu'un flux d'air entrant par l'ouverture d'entrée (3) puisse être dévié, le dispositif de déviation (2) étant collé ou soudé à l'intérieur du sac avec le matériau filtrant de la paroi du sac à poussières d'aspirateur,
**caractérisé en ce que** le dispositif de déviation (2) est réalisé pour partager le flux d'air en au moins deux courants partiels avec différents sens d'écoulement.

2. Sac à poussières d'aspirateur selon la revendication 1, comprenant en outre une plaque de maintien (4) servant à maintenir le sac dans un aspirateur, le dispositif de déviation étant agencé au niveau de la plaque de maintien et s'étendant à l'intérieur du sac.

3. Sac à poussières d'aspirateur selon l'une quelconque des revendications précédentes, le dispositif de déviation étant fixé sur le côté intérieur du sac en entourant au moins partiellement l'ouverture d'entrée.

4. Sac à poussières d'aspirateur selon l'une quelconque des revendications précédentes, le dispositif de déviation comprenant au moins une surface de déviation (5) opposée à l'ouverture d'entrée.

5. Sac à poussières d'aspirateur selon la revendication 4, l'au moins une surface de déviation étant agencée à un angle prédéfini par rapport au plan de l'ouverture d'entrée.

6. Sac à poussières d'aspirateur selon la revendication 4 ou 5, l'au moins une surface de déviation présentant une plus grande surface que la surface de l'ouverture d'entrée.

7. Sac à poussières d'aspirateur selon l'une quelconque des revendications précédentes, le dispositif de déviation présentant deux surfaces de déviation trapézoïdales ou rectangulaires, qui, en partant de l'ouverture d'entrée, se rejoignent de manière cunéiforme et sont reliées l'une à l'autre au niveau d'un bord de jonction opposé à l'ouverture d'entrée.

8. Sac à poussières d'aspirateur selon la revendication 7, le dispositif de déviation comprenant en outre au niveau d'au moins une extrémité du bord de jonction une ouverture de sortie et une zone entourant l'ouverture d'entrée et reliée au côté intérieur du sac, qui est réalisée à la manière d'un bloc de fond et présente une ouverture d'entrée.

9. Sac à poussières d'aspirateur selon l'une quelconque des revendications 1 - 6, le dispositif de déviation ayant la forme d'un parallélépipède, qui présente une ouverture d'entrée dans une première surface latérale entourant l'ouverture d'entrée et reliée au côté intérieur du sac et une ouverture de sortie dans au moins une autre surface latérale perpendiculaire à la première surface latérale.

10. Sac à poussières d'aspirateur selon la revendication 9, chaque ouverture de sortie occupant toute la surface latérale du parallélépipède.

11. Sac à poussières d'aspirateur selon l'une quelconque des revendications 8 - 10, au moins deux ouvertures de sortie se faisant face étant prévues.

12. Sac à poussières d'aspirateur selon l'une quelconque des revendications précédentes, le dispositif de déviation étant réalisé de telle manière qu'il présente dans une première position, perpendiculairement au plan de l'ouverture d'entrée, une dimension réduite par rapport à une deuxième position.

13. Sac à poussières d'aspirateur selon la revendication 12, le dispositif de déviation étant réalisé de sorte qu'il peut être amené de la première position à la deuxième position par un flux d'air d'aspiration.

14. Sac à poussières d'aspirateur selon la revendication 12 ou 13, le dispositif de déviation comprenant un élément formant ressort (7), qui exerce une force de rappel sur une partie du dispositif de déviation de sorte que le dispositif de déviation peut être amené de la deuxième position à la première position en fonction d'un flux d'air d'aspiration.

15. Sac à poussières d'aspirateur selon l'une quelconque des revendications 12 - 14, le dispositif de déviation présentant des lignes de pli (6), de sorte que le dispositif de déviation peut être amené de la première ou deuxième position à la deuxième respectivement première position.

16. Sac à poussières d'aspirateur selon l'une quelconque des revendications précédentes, le dispositif de déviation étant réalisé pour obturer l'ouverture d'entrée.

17. Sac à poussières d'aspirateur selon l'une quelconque des revendications précédentes, comprenant un élément d'étanchéité (8), en particulier pour étancher l'ouverture d'entrée.

18. Sac à poussières d'aspirateur selon la revendication 17, l'élément d'étanchéité étant agencé entre l'ouverture d'entrée et le dispositif de déviation ou à l'intérieur du dispositif de déviation.

19. Sac à poussières d'aspirateur selon la revendication 17 ou 18, le matériau de l'élément d'étanchéité comprenant du caoutchouc, un élastomère, une feuille ou une mousse.

20. Sac à poussières d'aspirateur selon l'une quelconque des revendications précédentes, le dispositif de déviation comprenant un matériau perméable à l'air.

21. Sac à poussières d'aspirateur selon l'une quelconque des revendications précédentes, le matériau du dispositif de déviation comprenant un plastique, un non-tissé ou papier posé à sec ou par voie humide, en particulier du carton, ou une feuille.

22. Sac à poussières d'aspirateur selon la revendication 21, la plaque de maintien et le dispositif de déviation étant réalisés en plastique.

23. Sac à poussières d'aspirateur selon la revendication 22, la plaque de maintien et le dispositif de déviation étant réalisés d'un seul tenant.
